# EUROPÄISCHE PATENTSCHRIFT

(11) **EP 2 356 322 B1**
(45) Veröffentlichungstag und Bekanntmachung des Hinweises auf die Patenterteilung: **26.04.2017**
(21) Anmeldenummer: 09745065.4
(22) Anmeldetag: 05.11.2009
(51) Int. Cl.: F01N 3/01, F01N 3/031, F01N 3/08, B01D 46/50, F01N 3/20, F01N 3/28, F01N 3/02, F02M 27/04

(54) **ANORDNUNG UND VERFAHREN ZUR REINIGUNG EINES ABGASSTROMES EINER VERBRENNUNGSKRAFTMASCHINE DURCH DIE ABSCHEIDUNG VON PARTIKELN**
ARRANGEMENT AND METHOD FOR CLEANING AN EXHAUST GAS FLOW OF AN INTERNAL COMBUSTION ENGINE BY SEPARATING PARTICLES
SYSTÈME ET PROCÉDÉ DE PURIFICATION D'UN FLUX DE GAZ D'ÉCHAPPEMENT D'UN MOTEUR À COMBUSTION INTERNE PAR DÉPÔT DE PARTICULES

(30) Priorität: 19.11.2008 DE 102008057960
(43) Veröffentlichungstag der Anmeldung: 17.08.2011
(73) Patentinhaber: Continental Automotive GmbH, 30165 Hannover (DE)
(72) Erfinder: HODGSON, Jan, 53840 Troisdorf (DE); BRÜCK, Rolf, 51429 Bergisch Gladbach (DE)
(86) Internationale Anmeldenummer: PCT/EP2009/064656
(87) Internationale Veröffentlichungsnummer: WO 2010/057779

(56) Entgegenhaltungen:
- EP-A1- 1 669 562
- WO-A1-2007/131362
- GB-A- 2 419 544
- JP-A- 57 148 017

## Beschreibung

Die vorliegende Erfindung betrifft eine Anordnung zur Reinigung eines Abgasstromes einer Verbrennungskraftmaschine, insbesondere eines Diesel-Motors, wobei Partikel aus dem Abgasstrom elektrisch aufgeladen, agglomeriert und aus dem Abgasstrom abgeschieden werden. Die Erfindung betrifft zudem ein Verfahren zum Betrieb einer derartigen Anordnung.

Bei Verbrennungskraftmaschinen ist es in Folge von verschärften Emissionsgrenzwerten seit einiger Zeit notwendig, im Abgas enthaltene Partikel aus dem Abgasstrom zu entfernen und in der Abgasleitung zurückzuhalten bzw. gegebenenfalls umzuwandeln. Zusätzlich sind durch Gesetzesvorschriften auch die Grenzwerte hinsichtlich der an die Umwelt abzugebenden Partikelmassen (Ruß), insbesondere von Diesel-Motoren, weiter verschärft worden.

Zu diesem Zweck wurde bereits eine Vielzahl unterschiedlicher Filtersysteme beschrieben, die z. B. auf so genannte Tiefbett-Filter, Wall-Flow-Filter, Nebenstrom-Filter, Zyklon-Abscheider und ähnliche Konzepte zurückgehen. Auch die Behandlung der Partikel mit elektrischen Feldern, Plasma und ähnlichem wurde bereits vorgeschlagen, um den gesetzlichen Bestimmungen Rechnung zu tragen. Gerade im Hinblick auf die neuartigen Kraftstoffe und/oder Verbrennungsprozesse ergeben sich stets neue Herausforderungen, die anders aufgebauten und/oder zusammengesetzten Partikel aus dem Abgas mobiler Verbrennungskraftmaschinen sicher und möglichst vollständig zu entfernen. EP 1 669 562 beschreibt eine Anordnung zur Reinigung eines A Abgasstromes einer Verbrennungsmaschine gemäß dem Oberbegriff des Anspruchs 1.

Für den Einbau von Abgasreinigungsanlagen in Personenkraftwagen, aber auch in Nutzfahrzeugen, steht insbesondere eine möglichst geringe Baugröße im Vordergrund der Entwicklung. Daher sind insbesondere kompakte Systeme gefordert, die einen Einbau in heutige und zukünftige Fahrzeuggenerationen ermöglichen.

Aufgabe der Erfindung ist es daher, die mit Bezug auf den Stand der Technik geschilderten Probleme zumindest teilweise zu lösen und insbesondere eine Anordnung zur Reinigung eines Abgasstromes einer Verbrennungskraftmaschine anzugeben, die einerseits die Partikelanzahl im Abgasstrom reduzieren und andererseits die Partikelmasse im Abgasstrom deutlich verringern kann. Dabei soll eine möglichst kompakte Bauform realisiert werden und auch Möglichkeiten zur Abgaswärmerückgewinnung in die Anordnung integrierbar sein.

Diese Aufgaben werden gelöst mit einer Anordnung gemäß den Merkmalen des Patentanspruchs 1 sowie durch ein Verfahren gemäß den Merkmalen des Patentanspruchs 11. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird die Aufgabe durch eine Anordnung zur Reinigung eines Abgasstromes einer Verbrennungskraftmaschine, insbesondere eines Diesel-Motors, dadurch gelöst, dass sie zumindest folgende Komponenten aufweist:
a. eine Ionisationseinrichtung zum elektrischen Aufladen von Partikeln im Abgasstrom,
b. eine Agglomerationseinrichtung zur zumindest teilweisen Agglomeration elektrisch aufgeladener Partikel,
c. einen Kanal, zumindest aufweisend eine durchströmbare Umfangsfläche, einen Einlass an einer ersten Stirnseite und einen Auslass an einer zweiten Stirnseite,
d. einen Radial-Wabenkörper, der eine innere Umfangsfläche und eine äußere Umfangsfläche und Strömungskanäle aufweist, wobei die Strömungskanäle sich von der inneren Umfangsfläche zur äußeren Umfangsfläche erstrecken und der Radial-Wabenkörper mit der inneren Umfangsfläche auf der Umfangsfläche des Kanals angeordnet ist und
e. einen Partikelabscheider, der die Partikel aus dem Abgasstrom zumindest temporär zurückhält,
wobei die Ionisationseinrichtung und die Agglomerationseinrichtung vor dem Einlass oder in dem Kanal und der Partikelabscheider nach dem Auslass oder in dem Kanal angeordnet sind.

Die Ionisationseinrichtung ist zum elektrischen Aufladen von Partikeln im Abgasstrom geeignet, die in der auf die Ionisationseinrichtung stromabwärts folgende Agglomerationseinrichtung zu größeren Partikeln agglomeriert werden. Dabei kann die Ionisationseinrichtung unterschiedlich ausgeführt sein, insbesondere sich auf einen freien Querschnitt einer Abgasleitung beziehen und/oder eine darin angeordnete Struktur. Eine solche Ionisierungsvorrichtung überträgt durch Ausbildung einer Potentialdifferenz (z. B. mehr als 5.000 V oder sogar mehr als 30.000 V) eine elektrische Ladung auf die kohlenstoffhaltigen Partikel, die in dem Abgasstrom enthalten sind.

Die Ionisationseinrichtung wird dementsprechend insbesondere durch eine Elektrode gebildet, die innerhalb des Abgasstromes angeordnet ist. Die Elektrode ist dabei insbesondere als Struktur oder Wabenkörper ausgeführt. Das elektrische Potential wird dann zwischen der Ionisationseinrichtung und der stromabwärts angeordneten Agglomerationseinrichtung gebildet, so dass die Partikel in der Ionisationseinrichtung elektrisch aufgeladen werden und an den Wänden der Agglomerationseinrichtung wenigstens zeitweise abgeschieden werden und dort oder bereits im Abgasstrom zu größeren Partikeln agglomerieren.

Weiter kann die Ionisationseinrichtung die Ladung auf die Partikel durch Ausbildung einer Corona-Entladung oder Plasma-Entladung übertragen.

Die Anordnung weist weiter einen Kanal auf, der zumindest teilweise durch die innere Umfangsfläche eines Radial-Wabenkörpers gebildet ist. Dementsprechend ist der Kanal auf seiner Umfangsfläche wenigstens teilweise offen ausgebildet, so dass der Abgasstrom direkt aus dem Kanal in die Wabenkörperstruktur des Radial-Wabenkörpers eintritt. Die Umfangsfläche des Kanals kann auch durch eine Hülse gebildet werden, die zumindest teilweise mit Öffnungen versehen ist, durch die der Abgasstrom aus dem Kanal austreten kann. Der Kanal weist zudem einen Einlass an einer ersten Stirnseite und einen Auslass an einer zweiten Stirnseite auf, wobei Einlass und Auslass insbesondere auch unterschiedlich große Flächen aufweisen können. Insbesondere ist der Auslass des Kanals kleiner ausgeführt als der Einlass.

Die Anordnung sieht weiter einen Radial-Wabenkörper vor, der zumindest teilweise die Umfangsfläche des Kanals umgibt und der zumindest von einem Großteil des den Kanal durchströmenden Abgasstromes durchströmt wird. Die Strömungskanäle des Radial-Wabenkörpers erstrecken sich dabei von der inneren Umfangsfläche zur äußeren Umfangsfläche in radialer Richtung zum Kanal (der Abgasleitung), wobei die Strömungskanäle zumindest teilweise auch eine in Umfangsrichtung gekrümmte Verlaufsform aufweisen können. Die Strömungskanäle des Radial-Wabenkörpers können zudem Strukturen aufweisen und/oder Einbauten, die eine Durchmischung bzw. Verwirbelung des Abgasstromes bewirken können. Der Radial-Wabenkörper wird bevorzugt aus zumindest teilweise strukturierten Metallfolien gebildet und weist insbesondere zudem Faserlagen auf.

Die Anordnung weist weiterhin einen Partikelabscheider auf, der die Partikel aus dem Abgasstrom zumindest zeitweise zurückhält, wobei der Partikelabscheider nach dem Auslass oder in dem (zentralen) Kanal (außerhalb des Radial-Wabenkörpers) angeordnet ist, so dass der Abgasstrom zumindest zum größten Teil den Radial-Wabenkörper ohne Durchströmung des Partikelabscheiders durchströmt. Ist der Partikelabscheider in dem Kanal angeordnet, so ist der Kanal gegenüber dem Radial-Wabenkörper insbesondere verlängert ausgeführt, so dass der Partikelabscheider bevorzugt die stromabwärts gelegene, innere Umfangsfläche des Radial-Wabenkörpers nicht überdeckt, sondern erst strömungstechnisch danach, außerhalb der Erstreckung des Radial-Wabenkörpers in Längsrichtung, (z. B. nach Art einer Sachgasse) angeordnet ist. Insbesondere kann der Partikelabscheider aber auch in dem Bereich des Kanals angeordnet sein, der innerhalb der inneren Umfangsfläche des Radial-Wabenkörpers liegt, also innerhalb seiner Erstreckung in Längsrichtung. Bei einer derartigen Ausführung ist der Partikelabscheider seinerseits insbesondere mit Öffnungen in Richtung der inneren Umfangsfläche des Radial-Wabenkörpers versehen und/oder weist einen gegenüber dem Kanal reduzierten Außendurchmesser auf, so dass der Abgasstrom auf der gesamten inneren Umfangsfläche des Radial-Wabenkörpers in die Strömungskanäle des Radial-Wabenkörpers eintreten kann.

Der Partikelabscheider ist mit einem größeren Strömungswiderstand als der Radial-Wabenkörper ausgestattet, so dass nur ein vergleichsweise kleiner Teil des Abgasstromes den Partikelabscheider beaufschlagt bzw. durchströmt. In besonderen Fällen kann er praktisch auch nahezu für das Abgas undurchdringbar ausgeführt sein, z. B. nach Art einer Prallplatte mit einer Partikelentfemeinrichtung (Heizer) und/oder als (schwer) durchströmbare poröse Matte bzw. Struktur.

Durch die Anordnung des Partikelabscheiders in dem Kanal oder nach dem Auslass wird der Abgasstrom zumindest teilweise aus dem Kanal in den Radial-Wabenkörper umgelenkt, wobei die agglomerierten Partikel aus dem Abgasstrom aufgrund der gesteigerten Partikelmasse eine solche Trägheit aufweisen, dass sie zumindest teilweise der Umlenkung des Abgasstromes nicht folgen können, sondern durch den Kanal in den Partikelabscheider überführt werden. Dazu ist es insbesondere nicht erforderlich, dass der Partikelabscheider von dem Abgasstrom durchströmt wird, vielmehr kann der Partikelabscheider auch als Strömungssackgasse in Form einer Wandung oder einer Struktur ausgeführt sein. Die Partikel werden so aus dem Abgasstrom in einen im Wesentlichen nicht durchströmten Bereich der Abgasleitung überführt, so dass sie nicht über den Radial-Wabenkörper in die stromabwärts angeordnete Abgasleitung abgeführt werden. Die Partikel bleiben so zumindest zeitweise in dem Partikelabscheider bzw. in der im wesentlichen nicht durchströmten Zone der Abgasleitung, die zur Ablagerung der agglomerierten Partikel aus dem Abgasstrom vorgesehen ist.

Bei einer durchströmbaren Ausführungsform des Partikelabscheiders wird ein geringerer Teil des Abgasstromes durch den Partikelabscheider hindurchgeführt und durch einen weiteren Abschnitt der Abgasleitung weitergeleitet. Die Partikel werden dann zumindest teilweise aus dem Abgasstrom herausgefiltert und zumindest zeitweise in dem Partikelabscheider zurückgehalten.

Die beschriebene Anordnung ist dazu geeignet, insbesondere bei Diesel-Motoren die im Abgas enthaltenden Partikel in der Ionisationseinrichtung und Agglomerationseinrichtung elektrisch aufzuladen und zumindest zeitweise in der Agglomerationseinrichtung miteinander zu verbinden. Die Partikel werden dort z. B. auf gegebenenfalls vorhandenen Strukturen der Agglomerationseinrichtung zusammengeführt, so dass sie agglomerieren und damit ihren durchschnittlichen Durchmesser und ihre Masse vergrößern. Die Partikel werden infolge des pulsierenden Abgasstromes oder insbesondere durch eine externe Anregung der Agglomerationseinrichtung von dieser abgelöst und zurück in den Abgasstrom abgegeben.

Infolge der Agglomeration der Partikel weisen diese eine nun so hohe Masse und damit so hohe Trägheit auf, dass sie der Umlenkung des Abgasstroms innerhalb des Kanals in den Radial-Wabenkörper nicht folgen können, sondern im Wesentlichen weiter in Richtung der Erstreckung des Kanals fliegen und in den Partikelabscheider überführt werden. Daher ist eine Ablenkung der Partikel aus dem Abgasstrom insbesondere über eine elektrische Feldanordnung, die einerseits sehr aufwendig zu konstruieren ist und andererseits einen recht hohen Energiebedarf aufweist, nicht erforderlich.

Außerdem ist auch bevorzugt, dass die Ionisationseinrichtung eine Vorrichtung zur Ausbildung einer Corona-Entladung oder Plasma-Entladung aufweist. Plasmen werden im Automobilbau bevorzugt mittels eines elektrischen Feldes erzeugt, das mit einer Hochspannung generiert wird. Insbesondere die Generierung eines Plasmas mit einer Corona-Entladung oder einer dielektrisch behinderten Entladung werden bevorzugt. Ist eine Corona-Entladung gewünscht, ist eine ungleichmäßige Ausrichtung des elektrischen Feldes möglich. So sind beispielsweise Vorrichtungen mit einem Draht bekannt, der von einem sehr starken elektrischen Feld umgeben ist, das jedoch radial auswärts deutlich abfällt und das ihn umgebende Gehäuse nicht erreicht, wodurch die Ausbildung eines Lichtbogens unterbunden wird. Alternativ dazu kann die Ausbildung von Lichtbögen durch gepulste Spannungsanlegung vermieden werden. Bei einer dielektrisch behinderten Entladung ist mindestens eine Elektrode mit einem Dielektrikum beschichtet. Die entstehenden Lichtbögen erlöschen unter der Oberfläche des dielektrischen Materials.

Gemäß einer Weiterbildung der Anordnung umfasst die Ionisationseinrichtung und/oder die Agglomerationseinrichtung zumindest ein Element der Gruppe Rohr, Struktur, Wabenkörper. Damit ist gemeint, dass die Ionisationseinrichtung und/oder Agglomerationseinrichtung innerhalb der Abgasleitung angeordnet ist und die elektrische Ladung auf die Partikel in der Ionisationseinrichtung entweder über das durchströmte Rohr, also einen Abschnitt der Abgasleitung, auf die Abgaspartikel überführt wird oder durch eine in der Abgasleitung vorgesehene Struktur, die mit einem elektrischen Potential gegenüber der Agglomerationseinrichtung beaufschlagt ist. Die Struktur erstreckt sich dabei zumindest über einen größten Teil eines Querschnitts der Abgasleitung, so dass die Partikel, unabhängig von ihrer Lage im Abgasstrom, mit einer elektrischen Ladung versehen werden. Die Struktur kann insbesondere sternförmig oder aber ähnlich einem Wabenkörper insbesondere mit einer Zelldichte von 10 bis 200 cpsi (cells per square inch), vorzugsweise 25 bis 100 cpsi, ausgeführt sein. Diese Elemente werden zusätzlich auch in der Agglomerationseinrichtung eingesetzt, weisen hier insbesondere eine größere Länge in Durchströmungsrichtung auf. Der für die Einrichtungen vorgesehene Wabenkörper weist insbesondere nicht strukturierte glatte Strömungswände auf, also keine zusätzlichen Strömungswiderstände oder Verwirbelungs- oder Mischerelemente, und ist seinerseits aus zumindest teilweise strukturierten, insbesondere gewellten und glatten Metallfolien aufgebaut. Durch eine als Wabenkörper ausgeführte Agglomerationseinrichtung wird einerseits die Oberfläche zur Abscheidung und Agglomeration der im Abgas enthaltenen Partikel erhöht und andererseits die Abgasströmung "beruhigt", so dass insbesondere eine laminare Abgasströmung nach der Agglomerationseinrichtung vorliegt. Eine derartige Laminarisierung der Abgasströmung fördert die Abscheidung der agglomerierten Partikel aus dem Abgas in den Partikelabscheider bzw. verhindert, dass die Partikel infolge vorliegender Turbulenzen im Abgas durch den Radial-Wabenkörper abströmen. Das Element der Gruppe Rohr, Struktur, Wabenkörper ist insbesondere gegenüber der Abgasleitung elektrisch isoliert ausgeführt, so dass eine räumlich begrenzte Potentialerzeugung zwischen Ionisations- und Agglomerationseinrichtung ermöglicht ist.

Durch das elektrische Potential zwischen Ionisationseinrichtung und Agglomerationseinrichtung werden die Partikel zumindest teilweise an der Rohrwandung oder den Oberflächen der Struktur bzw. des Wabenkörpers der Agglomerationseinrichtung abgeschieden, so dass sie spätestens dort, aber auch bereits im Abgasstrom, zu größeren Durchmessern und größerer Masse agglomerieren.

Gemäß einer weiteren vorteilhaften Weiterbildung der Anordnung weist der Radial-Wabenkörper wenigstens teilweise zumindest eine Beschichtung aus der Gruppe SCR-Beschichtung, 3-Wege-Beschichtung, NOₓ-Adsorber-Beschichtung auf. Als SCR-Beschichtung wird eine Beschichtung bezeichnet, die zur Umsetzung von Stickoxiden mittels des Verfahrens "*selective catalytic reaction*" geeignet ist. Die SCR-Beschichtung führt insbesondere dazu, dass im Abgas vorhandene Stickoxide durch bereitgestelltes Reduktionsmittel (Ammoniak, Harnstoff, AdBlue) und durch die SCR-Beschichtung des Radial-Wabenkörpers im Wesentlichen in elementaren Stickstoff und Wasser umgewandelt werden. Eine 3-Wege-Beschichtung ist insbesondere für Otto-Motoren vorgesehen und führt eine Oxidation von Kohlenmonoxid und Kohlenwasserstoffverbindungen sowie der Reduktion von Stickstoffoxiden durch. Eine NOₓ-Adsorber-Beschichtung speichert Stickstoffoxide (NOₓ) aus Abgasen von Otto- und Diesel-Motoren zwischen, so dass während des Magerbetriebs der Verbrennungskraftmaschine Stickstoffoxide zurückgehalten, dann durch einen kurzzeitigen Betrieb mit einer fetten Abgasmischung reduziert und schließlich aus der Beschichtung herausgelöst werden können.

Gemäß einer weiteren Ausführungsform der Anordnung weist der Radial-Wabenkörper Strömungskanäle auf, die in einem Winkel von 90° bis 135° zu einer Mittelachse des Kanals angeordnet sind. Dieser Winkel wird insbesondere zwischen der Mittelachse des Kanals und der Orientierung der Strömungskanäle direkt im Anschluss an die innere Umfangsfläche des Radial-Wabenkörpers gebildet. Damit wird eine scharfe Umlenkung des Abgasstromes erreicht, so dass die agglomerierten Partikel im Abgasstrom zum allergrößten Teil in dem im Kanal oder nach dem Auslass des Kanals angeordneten Partikelabscheider abgeschieden werden.

Gemäß einer weiteren bevorzugten Ausführungsform der Anordnung schließt sich eine EGR-Leitung an den Partikelabscheider an. Eine solche EGR-Leitung (EGR: "*exhaust gas recirculation*") ist regelmäßig derart ausgelegt, dass nur ein verhältnismäßig kleiner Anteil des Abgasstromes der Verbrennungskraftmaschine erneut zugeführt wird, um im Abgas enthaltene Stickoxide bzw. unverbrannte Kohlen-Wasserstoff-Verbindungen weiter zu reduzieren. Dazu ist insbesondere die gemäß der vorliegenden Anordnung vorgeschlagene Abzweigung eines geringen Teils des Abgasstromes über den Partikelabscheider vorzusehen, wobei der Partikelabscheider in diesem Fall durchströmbar ausgeführt ist. Der Abgasstrom, der damit der EGR-Leitung und im Folgenden dem Verbrennungsmotor erneut zugeführt wird, ist damit insbesondere von im Abgas enthaltenen Partikeln weitestgehend gereinigt.

Gemäß einer Weiterbildung der Anordnung weist der Partikelabscheider zumindest eine Regenerationseinrichtung aus der Gruppe Heizdraht, Heizkatalysator, Einspritzung, Beschichtung auf. Durch eine Regenerationseinrichtung der angeführten Art wird erreicht, dass die im Partikelabscheider vorhandenen, aus dem Abgasstrom zurückgehaltenen, Partikel in regelmäßigen oder auch in Abhängigkeit von der Beladung des Partikelabscheiders vorgesehenen Intervallen regeneriert wird, so dass ein Zusetzen des Partikelabscheiders in Folge der Beladung mit Partikeln aus dem Abgasstrom verhindert wird. Die Regeneration kann entweder thermisch oder aber auch als kontinuierliche Regeneration (CRT) erfolgen. Bei der kontinuierlichen Regeneration wird durch ein entsprechendes Angebot von Stickstoffdioxid im Abgasstrom der in dem Partikelabscheider vorhandene Ruß zu Kohlenstoffdioxid umgewandelt.

Gemäß einer weiteren bevorzugten Weiterbildung der Anordnung ist wenigstens ein Wärmetauscher zumindest um Teilbereiche des Radial-Wabenkörpers und/oder des Partikelabscheiders angeordnet. Durch die Integration eines Wärmetauschers in die Anordnung ist eine Rückgewinnung der Wärmeenergie des Abgases möglich, z. B. durch Umwandlung der thermischen Energie in elektrische Energie, die dann den elektrischen Speichermedien des Kraftfahrzeuges bzw. den elektrischen Verbrauchern zugeführt werden kann. Dazu kann der Wärmetauscher z. B. mit thermoelektrischen Elementen gekoppelt sein, die außerhalb und/oder innerhalb der Anordnung vorgesehen sein können.

Gemäß einer bevorzugten Ausführungsform weist der Wärmetauscher einen oder mehrere Heizkreisläufe auf, nämlich einen außerhalb der äußeren Umfangsfläche des Radial-Wabenkörpers angeordneten ersten Heizkreislauf, einen zumindest teilweise innerhalb des Radial-Wabenkörpers angeordneten zweiten Heizkreislauf und/oder einen außerhalb des Partikelabscheiders angeordneten dritten Heizkreislauf. Insbesondere die innerhalb des Radial-Wabenkörpers bzw. außerhalb der äußeren Umfangsfläche des Radial-Wabenkörpers angeordneten Heizkreisläufe werden somit großflächig von dem Abgasstrom, der den Radial-Wabenkörper durchströmt, beaufschlagt, so dass eine sehr hohe Effektivität des Wärmetauschers erreicht werden kann. Der Heizkreislauf innerhalb des Wabenkörpers kann dabei im Wesentlichen in Längsrichtung der Erstreckung des Kanals bzw. des Radial-Wabenkörpers durch die Struktur des Wabenkörpers verlaufen oder im Wesentlichen quer zur Kanalachse und zwischen den Strömungskanälen des Radial-Wabenköpers angeordnet sein. Gegebenenfalls können scheibenförmige Segmente mit thermoelektrischen Elementen zwischen den Strömungskanälen des Radial-Wabenkörpers angeordnet sein, so dass die Umwandlung der Abgaswärmeenergie in elektrische Energie zumindest teilweise innerhalb des Radial-Wabenkörpers erfolgt. Auch hierdurch wird eine kompakte Bauweise der Anordnung ermöglicht.

Die Anordnung kann weiter so gestaltet sein, dass wenigstens ein erster Oxidationskatalysator vor der einen Ionisationseinrichtung vorgesehen ist. Mit dem Oxidationskatalysator kann in vorteilhafter Weise die Zusammensetzung des Abgases, z. B. hinsichtlich des Stickstoffdioxides, und/oder die Temperatur des Abgases eingestellt werden.

Das erfindungsgemäße Verfahren, auf das sich die Erfindung ferner richtet, weist zumindest folgende Schritte zur Abgasreinigung einer Verbrennungskraftmaschine auf:
i. elektrisches Aufladen von in einem Abgasstrom enthaltenen Partikeln;
ii. Agglomerieren der aufgeladenen Partikel zu größeren Partikeln mit erhöhter Massenträgheit;
iii. Umlenken von zumindest 80 Vol.-% des Abgasstromes um zumindest 90 Winkelgrad;
iv. Trennen der größeren Partikel mit nun erhöhter Massenträgheit aus dem Abgasstrom durch das Umlenken des Abgasstromes und
v. Abscheiden der größeren Partikel.
Insbesondere ist das Verfahren geeignet zum Betrieb der erfindungsgemäßen Anordnung.

Weiterhin werden durch das vorgeschlagene Verfahren zumindest 80 Vol-%, bevorzugt zumindest 90 Vol-% und besonders bevorzugt zumindest 95 Vol-% des Abgasstromes um mindestens 90 Winkelgrad umgelenkt, so dass es einen hierfür vorgesehenen Radial-Wabenkörper durchströmt. Bei Ausführung eines Partikelabscheiders, der als (Strömungs-)Sackgasse ausgeführt ist, kommt es zu einer 100 Vol-%-igen Umlenkung des Abgasstromes innerhalb des Kanals der erfindungsgemäßen Anordnung.

Der nicht abgelenkte Volumenstrom des Abgases strömt über einen dafür vorgesehenen Partikelabscheider, in dem die zumindest teilweise agglomerierten Partikel zumindest teilweise zurückgehalten werden. Nach Durchströmen des Partikelabscheiders wird dieser kleinere Volumenstrom bevorzugt einer EGR-Leitung zugeführt oder vereinigt sich stromabwärts der Anordnung erneut mit dem umgelenkten Abgasstrom.

Eine bevorzugte Ausführungsform des Verfahrens weist zusätzlich die Möglichkeit der Rückgewinnung von Wärmeenergie aus dem Abgasstrom auf. Dafür ist eine zumindest teilweise Umwandlung von thermischer Energie des Abgasstromes in elektrische Energie vorgesehen. Durch einen derartigen Wärmetauscher kann insbesondere auch die Wärme aus dem geringeren Teil des Abgasstroms abgeführt werden, der über eine EGR-Leitung dem Verbrennungsmotor erneut zugeführt wird.

Gemäß einer bevorzugten Ausführungsform wird schließlich auch ein Kraftfahrzeug mit einem Abgassystem, aufweisend eine hier erfindungsgemäße Anordnung, vorgeschlagen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt sind. Für gleiche Gegenstände werden in den Figuren auch gleiche Bezugszeichen verwendet. Es zeigen (schematisch):
- Fig. 1:: ein Abgassystem einer Verbrennungskraftmaschine mit einer Anordnung;
- Fig. 2:: eine erste Ausgestaltung der Anordnung;
- Fig. 3:: eine weitere Ausgestaltung der Anordnung; und
- Fig. 4:: eine weitere Ausgestaltung eines Abgassystems einer Verbrennungskraftmaschine.

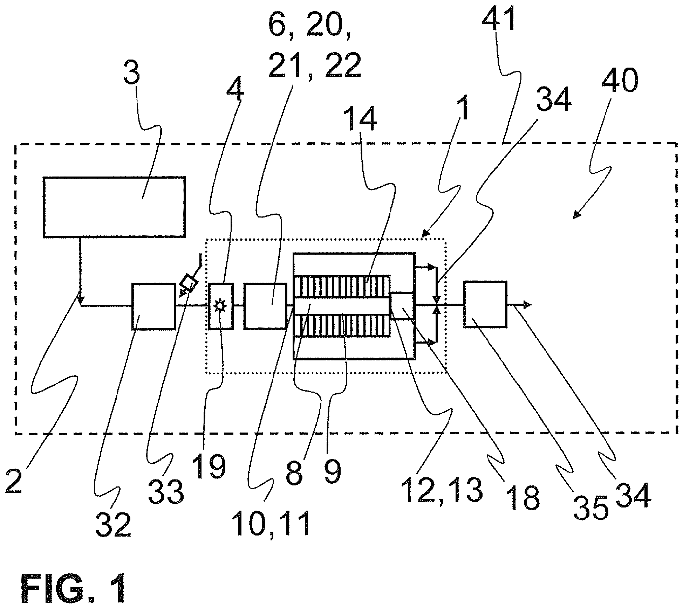

Fig. 1 zeigt schematisch ein Kraftfahrzeug 41 mit einem Abgassystem 40, wobei stromabwärts einer Verbrennungskraftmaschine 3 eine Anordnung 1 zur Reinigung eines Abgasstromes 2 vorgesehen ist. Dabei ist der Anordnung 1 ein erster Oxidationskatalysator 32 strömungstechnisch vorgeschaltet, der insbesondere nach seiner stromabwärts angeordneten Stirnseite eine Reduktionsmittelzugabeeinheit 33 aufweist, die bevorzugt die Rückseite des ersten Oxidationskatalysators 32 mit einem Reduktionsmittelstrom beaufschlagt. Die Anordnung 1 selber weist eine Ionisationseinrichtung 4 mit einer Vorrichtung 19 auf, die geeignet ist, Partikel des Abgasstromes 2 elektrisch aufzuladen. Diese elektrisch aufgeladenen Partikel werden in der stromabwärts angeordneten Agglomerationseinrichtung 6, die durch ein Rohr 20, eine Struktur 21 oder einen Wabenkörper 22 gebildet wird, zumindest zeitweise abgeschieden. Die derartig agglomerierten, nun größeren Partikel werden infolge der Pulsation des Abgasstromes 2 und/oder durch eine externe Anregung der Agglomerationseinrichtung 6 in den Abgasstrom 2 zurückgegeben und treten somit in den stromabwärts angeordneten Einlass 10 an einer ersten Stirnseite 11 des Kanals 8 ein. Zumindest ein Großteil des Abgasstromes 2 wird innerhalb des Kanals 8 in einen Radial-Wabenkörper 14 umgelenkt. Der Radial-Wabenkörper 14 ist dabei auf der Umfangsfläche 9 des Kanals 8 angeordnet. Weiter weist der Kanal 8 einen Auslass 12 an einer zweiten Stirnseite 13 des Kanals 8 auf, durch die zumindest ein Teil der Partikel, insbesondere die größeren Partikel, in einen Partikelabscheider 18 überführt werden. Der Abgasstrom 2 wird nach Durchströmen des Radial-Wabenkörpers 14 bzw. und insbesondere nach Durchströmen des Partikelabscheiders 18 wieder durch Abgasleitungen 34 in einer gemeinsamen Abgasleitung 34 zusammengeführt und insbesondere nach Durchströmen eines zweiten Oxidationskatalysators 35, der hier insbesondere als Sperrkatalysator zur Vermeidung des Durchtritts von Reduktionsmittel vorgesehen ist, an die Umgebung abgeführt.

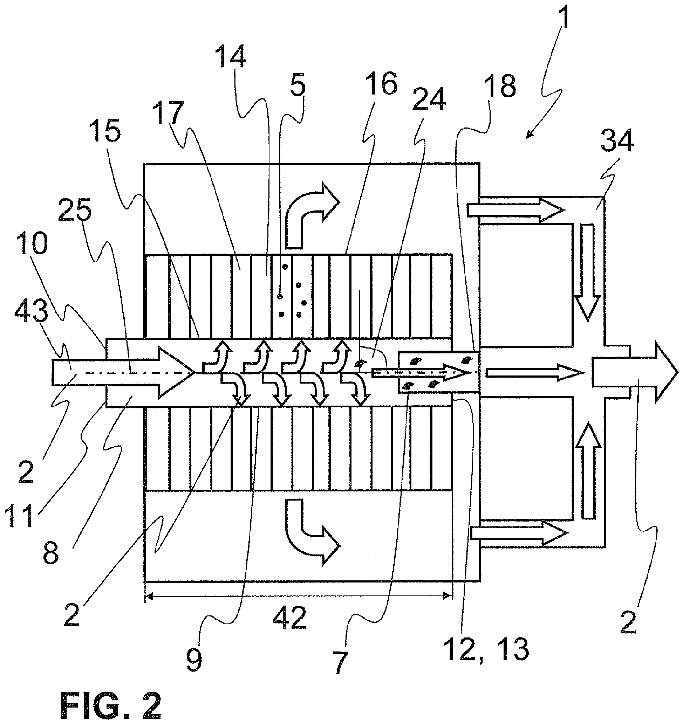

Fig. 2 zeigt eine erste Ausgestaltung der Anordnung 1. Dabei sind hier die Ionisationseinrichtung und die Agglomerationseinrichtung nicht gezeigt. Diese können außerhalb des Kanals 8 oder innerhalb des Kanals 8 angeordnet sein. Bei einer Anordnung innerhalb des Kanals 8 ist dieser gegen die Strömungsrichtung des Abgasstroms 2 entlang der Mittelachse 25 verlängert, so dass Ionisationseinrichtung und Agglomerationseinrichtung außerhalb der Erstreckung 42 des Radial-Wabenkörpers 14 angeordnet und die Strömungskanäle 17 des Radial-Wabenkörpers 14 frei zugänglich sind. Der Abgasstrom 2 tritt in den Kanal 8 über den Einlass 10, der an einer ersten Stirnseite 11 des Kanals 8 angeordnet ist, in den Kanal 8 ein und wird infolge des größeren Strömungswiderstandes des in oder nach dem Kanal 8 angeordneten Partikelabscheiders 18 zumindest zum größten Teil in den Radial-Wabenkörper 14 um den Winkel 24 umgelenkt. Der Radial-Wabenkörper 14 ist dabei mit seiner inneren Umfangsfläche 15 auf der Umfangsfläche 9 des Kanals 8 angeordnet, so dass der Abgasstrom 2 zumindest zum größten Teil durch die Strömungskanäle 17 des Radial-Wabenkörpers 14 radial nach außen strömt. Dieser Teil des Abgasstroms 2 strömt dann über die äußere Umfangsfläche 16 des Radial-Wabenkörpers 14 ab und wird durch Abgasleitungen 34 weitergeführt. Ein insbesondere kleiner Teil des Abgasstromes 2 durchströmt den Kanal 8 und wird in einen Partikelabscheider 18 überführt, der hier in dem Kanal 8 vor einem Auslass 12 des Kanals 8 an einer zweiten Stirnseite 13 des Kanals 8 angeordnet ist. Der Partikelabscheider 18 ist dabei zumindest teilweise innerhalb der Erstreckung 42 in Längsrichtung 43 des Radial-Wabenkörpers 14 angeordnet. Dabei ist der Durchmesser des Partikelabscheiders 18 kleiner ausgeführt als der Durchmesser des Kanals 8, so dass alle Strömungskanäle 17 des Radial-Wabenkörpers 14 von dem Abgasstrom 2 durchströmt werden können. Dieser bevorzugt nur kleine Teil des Abgasstromes 2 weist nun infolge der Umlenkung des Abgasstromes 2 durch den Radial-Wabenkörper 14 einen Großteil der im Abgasstrom 2 enthaltenen Partikel 5 auf, die durch Durchströmung der Ionisationseinrichtung und Agglomerationseinrichtung zu größeren Partikeln 7 agglomeriert wurden. Diese Partikel 7 werden nun in dem Partikelabscheider 18 abgeschieden. Der den Partikelabscheider 18 durchströmende Teil des Abgasstromes 2 wird dann durch gemeinsame Abgasleitungen 34 mit dem Abgasstrom, der den Radial-Wabenkörper 14 durchströmt hat, zusammengeführt und weitergeleitet.

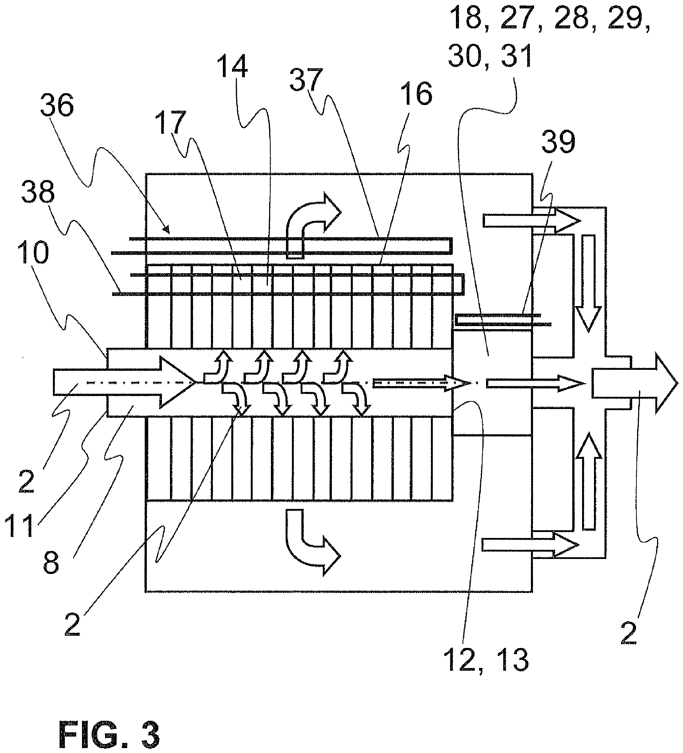

Fig. 3 zeigt eine weitere Ausgestaltung der Anordnung 1, wobei auch hier entsprechend Fig. 2 Ionisationseinrichtung und Agglomerationseinrichtung nicht gezeigt sind. Der Abgasstrom 2 tritt über den Einlass 10, der an der ersten Stirnseite 11 des Kanals 8 angeordnet ist, in den Kanal 8 ein und wird zumindest zum größten Teil über den Radial-Wabenkörper 14 umgelenkt. Dabei ist hier zumindest ein Wärmetauscher 36 vorgesehen, insbesondere mit einem ersten Heizkreislauf 37, der außerhalb der äußeren Umfangsfläche 16 des Radial-Wabenkörpers 14 angeordnet ist. Zudem ist ein gegebenenfalls mit dem ersten Heizkreislauf 37 verbundener zweiter Heizkreislauf 38 vorgesehen, der insbesondere unabhängig von diesem ausgeführt ist. Dieser zweite Heizkreislauf 38 kann auch unabhängig von dem ersten Heizkreislauf 37 vorgesehen sein. Er erstreckt sich innerhalb des Radial-Wabenkörpers 14 und ist insbesondere quer zu den Strömungskanälen 17 des Radial-Wabenkörpers 14 angeordnet.

Ein insbesondere kleiner Teil des Abgasstromes 2 durchströmt den Kanal 8 vollständig und wird über einen Auslass 12 des Kanals 8 in den Partikelabscheider 18 überführt, der hinter einem Auslass 12 des Kanals 8 an einer zweiten Stirnseite 13 des Kanals 8 angeordnet ist.

Insbesondere ist ein dritter Heizkreislauf 39 vorgesehen, der Wärme aus dem Partikelabscheider 18 abführen kann, die insbesondere durch kontinuierliche Regeneration aber auch durch thermische Regeneration innerhalb des Partikelabscheiders 18 erzeugt wird.

Die Heizkreisläufe 37, 38, 39 können dabei thermoelektrische Elemente aufweisen, so dass eine Umwandlung der thermischen Energie des Abgases in elektrische Energie ermöglicht wird. Die thermoelektrischen Elemente können innerhalb oder außerhalb der Anordnung 1 vorgesehen sein.

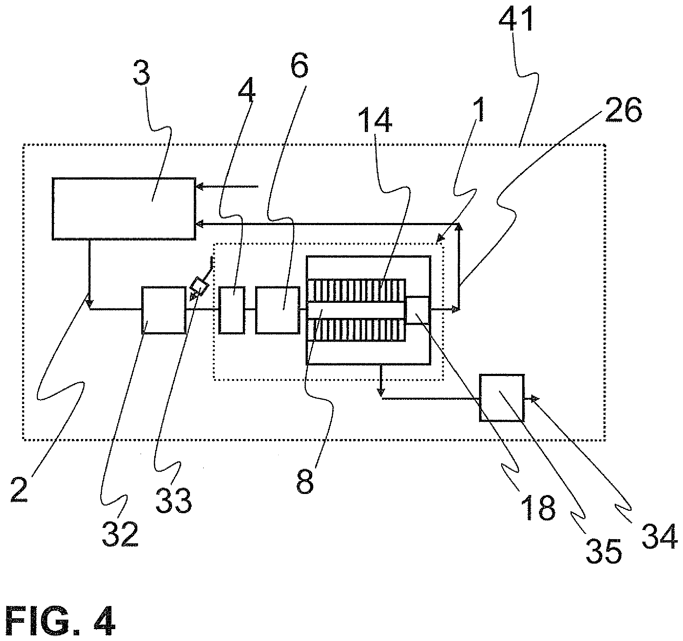

Fig. 4 zeigt eine weitere Ausgestaltung der Anordnung 1, wobei hier eine Verbrennungskraftmaschine 3 eines Kraftfahrzeuges 41 vorgesehen ist, der einen Teil des Abgasstromes 2 über eine EGR-Leitung 26 zugeführt wird. Dabei durchströmt ein Abgasstrom 2 von der Verbrennungskraftmaschine 3 einen insbesondere vorgesehenen ersten Oxidationskatalysator 32, der zur Umwandlung von im Abgasstrom 2 vorliegenden Kohlen-Wasserstoff-Verbindungen und Kohlenmonoxid geeignet ist. An dessen Rückseite ist stromabwärts insbesondere eine Reduktionsmittelzugabeeinheit 33 zur Zugabe eines Reduktionsmittels in den Abgasstrom 2 angeordnet, wobei das Reduktionsmittel bevorzugt auf die stromabwärts angeordnete Stirnseite des ersten Oxidationskatalysators 32 aufgebracht wird. Dadurch wird eine weitgehende Verdampfung und gute Verteilung des Reduktionsmittels in dem Abgasstrom 2 erreicht, der nachfolgend der Ionisationseinrichtung 4 und der Agglomerationseinrichtung 6 zugeführt wird. Der Abgasstrom 2 wird dann in den Kanal 8 überführt und von dort aus über den Radial-Wabenkörper 14 bzw. über den Partikelabscheider 18 weitergeleitet, wobei die Partikel zum größten Teil aus dem Abgasstrom 2 durch den Partikelabscheider 18 entfernt wurden. Dabei wird der Abgasstrom 2, der über den Partikelabscheider 18 abgeführt wird, durch eine EGR-Leitung 26 der Verbrennungskraftmaschine 3 erneut zugeführt. Der Abgasstrom 2, der über den Radial-Wabenkörper 14 abströmt, wird einer Abgasleitung 34 zugeführt, die gegebenenfalls einen zweiten Oxidationskatalysator 35 aufweist, der hier als Sperr-Katalysator ausgelegt wird, so dass das Reduktionsmittel nicht an die Umgebung abgegeben wird.

Die Erfindung betrifft demnach insbesondere eine Anordnung zur Reinigung eines Abgasstromes einer mobilen Verbrennungskraftmaschine, die zumindest eine Ionisationseinrichtung, eine Agglomerationseinrichtung und einen (katalytisch aktiven) Radial-Wabenkörper um einen Kanal der Abgasleitung herum aufweist, wobei das Abgas von dem Kanal in den Radial-Wabenkörper umgelenkt wird, während die agglomerierten Partikel in einem Partikelabscheider des Kanals eingefangen werden.

### Bezugszeichenliste

- 1: Anordnung
- 2: Abgasstrom
- 3: Verbrennungskraftmaschine
- 4: Ionisationseinrichtung
- 5: Partikel
- 6: Agglomerationseinrichtung
- 7: größere Partikel
- 8: Kanal
- 9: Umfangsfläche
- 10: Einlass
- 11: erste Stirnseite
- 12: Auslass
- 13: zweite Stirnseite
- 14: Radial-Wabenkörper
- 15: innere Umfangsfläche
- 16: äußere Umfangsfläche
- 17: Strömungskanal
- 18: Partikelabscheider
- 19: Vorrichtung
- 20: Rohr
- 21: Struktur
- 22: Wabenkörper
- 23: Beschichtung
- 24: Winkel
- 25: Mittelachse
- 26: EGR-Leitung
- 27: Regenerationseinrichtung
- 28: Heizdraht
- 29: Heizkatalysator
- 30: Einspritzung
- 31: Beschichtung
- 32: erster Oxidationskatalysator
- 33: Reduktionsmittelzugabeeinheit
- 34: Abgasleitung
- 35: zweiter Oxidationskatalysator
- 36: Wärmetauscher
- 37: erster Heizkreislauf
- 38: zweiter Heizkreislauf
- 39: dritter Heizkreislauf
- 40: Abgassystem
- 41: Kraftfahrzeug
- 42: Erstreckung
- 43: Längsrichtung

## Patentansprüche

1. Anordnung (1) zur Reinigung eines Abgasstromes (2) einer Verbrennungskraftmaschine (3) zumindest aufweisend die folgenden Komponenten:
a. eine Ionisationseinrichtung (4) zum elektrischen Aufladen von Partikeln (5) im Abgasstrom (2),
b. eine Agglomerationseinrichtung (6) zur zumindest teilweisen Agglomeration elektrisch aufgeladener Partikel (5),
c. einen Kanal (8), zumindest aufweisend eine durchströmbare Umfangsfläche (9), einen Einlass (10) an einer ersten Stirnseite (11) und einen Auslass (12) an einer zweiten Stirnseite (13),
d. einen Radial-Wabenkörper (14), der eine innere Umfangsfläche (15) und eine äußere Umfangsfläche (16) und Strömungskanäle (17) aufweist, wobei die Strömungskanäle (17) sich von der inneren Umfangsfläche (15) zur äußeren Umfangsfläche (16) erstrecken und der Radial-Wabenkörper (14) mit der inneren Umfangsfläche (15) auf der Umfangsfläche (9) des Kanals (8) angeordnet ist und
e. einen Partikelabscheider (18), der die Partikel (5) aus dem Abgasstrom (2) zumindest temporär zurückhält,
wobei die Ionisationseinrichtung (4) und die Agglomerationseinrichtung (6) vor dem Einlass (10) oder in dem Kanal (8) und der Partikelabscheider (18) nach dem Auslass (12) oder in dem Kanal (8) angeordnet sind, so dass der Abgasstrom (2) zumindest teilweise aus dem Kanal (8) in den Radial-Wabenkörper (14) umgelenkt wird, **dadurch gekennzeichnet, dass** die agglomerierten Partikel (5) aus dem Abgasstrom (2) aufgrund der gesteigerten Partikelmasse eine solche Trägheit aufweisen, dass sie zumindest teilweise der Umlenkung des Abgasstroms (2) nicht folgen können, sondern durch den Kanal (8) in den Partikelabscheider (18) überführt werden.

2. Anordnung (1) nach Patentanspruch 1, wobei die Ionisationseinrichtung (4) eine Vorrichtung (19) zur Ausbildung einer Corona-Entladung oder Plasma-Entladung aufweist.

3. Anordnung (1) nach einem der vorhergehenden Patentansprüche, wobei die Agglomerationseinrichtung (6) zumindest ein Element der Gruppe Rohr (20), Struktur (21), Wabenkörper (22) umfasst.

4. Anordnung (1) nach einem der vorhergehenden Patentansprüche, wobei der Radial-Wabenkörper (14) wenigstens teilweise zumindest eine Beschichtung (23) aus der Gruppe SCR-Beschichtung, 3-Wege-Beschichtung, NOₓ-Adsorber-Beschichtung aufweist.

5. Anordnung (1) nach einem der vorhergehenden Patentansprüche, wobei der Radial-Wabenkörper (14) Strömungskanäle (17) aufweist, die in einem Winkel (24) von 90° bis 135° zu einer Mittelachse (25) des Kanals (8) angeordnet sind.

6. Anordnung (1) nach einem der vorhergehenden Patentansprüche, wobei sich eine EGR-Leitung (26) an den Partikelabscheider (18) anschließt.

7. Anordnung (1) nach einem der vorhergehenden Patentansprüche, wobei der Partikelabscheider (18) zumindest eine Regenerationseinrichtung (27) aus der Gruppe Heizdraht (28), Heizkatalysator (29), Einspritzung (30), Beschichtung (31) aufweist.

8. Anordnung (1) nach einem der vorhergehenden Patentansprüche, wobei wenigstens ein Wärmetauscher (36) zumindest um Teilbereiche des Radial-Wabenkörpers (14) und/oder des Partikelabscheiders (18) angeordnet ist.

9. Anordnung (1) nach Patentanspruch 8, wobei der Wärmetauscher (36) mehrere Heizkreisläufe aufweist, nämlich einen außerhalb der äußeren Umfangsfläche (16) des Radial-Wabenkörpers (14) angeordneten ersten Heizkreislauf (37), einen zumindest teilweise innerhalb des Radial-Wabenkörpers (14) angeordneten zweiten Heizkreislauf (38) sowie einen außerhalb des Partikelabscheiders (18) angeordneten dritten Heizkreislauf (39).

10. Anordnung (1) nach einem der vorhergehenden Patentansprüche, wobei wenigstens ein erster Oxidationskatalysator (32) vor der einen Ionisationseinrichtung (4) vorgesehen ist.

11. Verfahren zum Betrieb einer Anordnung zur Abgasreinigung einer Verbrennungskraftmaschine (3) nach einem der vorhergehenden Patentansprüche, aufweisend zumindest die folgenden Schritte:
i. elektrisches Aufladen von in einem Abgasstrom (2) enthaltenen Partikeln (5);
ii. Agglomerieren der aufgeladenen Partikel (5) zu größeren Partikeln mit erhöhter Massenträgheit;
iii. Umlenken von zumindest 80 Vol.-% des Abgasstromes (2) um zumindest 90 Winkelgrad;
iv. Trennen der größeren Partikel mit nun erhöhter Massenträgheit aus dem Abgasstrom (2) durch das Umlenken des Abgasstromes (2) und
v. Abscheiden der größeren Partikel;
wobei die agglomerierten Partikel (5) aus dem Abgasstrom (2) aufgrund der gesteigerten Partikelmasse eine solche Trägheit aufweisen, dass sie zumindest teilweise der Umlenkung des Abgasstroms (2) nicht folgen können, sondern in einen Partikelabscheider (18) überführt werden.

12. Kraftfahrzeug (41) mit einem Abgassystem (40), aufweisend eine Anordnung (1) nach einem der Patentansprüche 1 bis 10.

## Claims

1. Arrangement (1) for the purification of an exhaust-gas flow (2) of an internal combustion engine (3), at least having the following components:
a. an ionization device (4) for electrically charging particles (5) in the exhaust-gas flow (2),
b. an agglomeration device (6) for at least partially agglomerating electrically charged particles (5),
c. a duct (8), at least having a peripheral surface (9) through which flow can pass, an inlet (10) at a first end side (11) and an outlet (12) at a second end side (13),
d. a radial honeycomb body (14) which has an inner peripheral surface (15) and an outer peripheral surface (16) and flow ducts (17), the flow ducts (17) extending from the inner peripheral surface (15) to the outer peripheral surface (16) and the radial honeycomb body (14) being arranged with the inner peripheral surface (15) on the peripheral surface (9) of the duct (8), and
e. a particle separator (18) which at least temporarily retains the particles (5) from the exhaust-gas flow (2),
the ionization device (4) and the agglomeration device (6) being arranged upstream of the inlet (10) or in the duct (8) and the particle separator (18) being arranged downstream of the outlet (12) or in the duct (8), so that the exhaust-gas flow (2) is deflected at least partially out of the duct (8) and into the radial honeycomb body (14), **characterized in that** the agglomerated particles (5) from the exhaust-gas flow (2), on account of the increased particle mass, have such an inertia that they at least partially cannot follow the deflection of the exhaust-gas flow (2), but rather pass through the duct (8) into the particle separator (18).

2. Arrangement (1) according to Patent Claim 1, the ionization device (4) having an apparatus (19) for generating a corona discharge or plasma discharge.

3. Arrangement (1) according to one of the preceding patent claims, the agglomeration device (6) comprising at least one element from the group comprising pipe (20), structure (21) and honeycomb body (22).

4. Arrangement (1) according to one of the preceding patent claims, the radial honeycomb body (14) at least partially having at least one coating (23) from the group comprising SCR coating, 3-way coating and NOₓ adsorber coating.

5. Arrangement (1) according to one of the preceding patent claims, the radial honeycomb body (14) having flow ducts (17) which are arranged at an angle (24) of 90° to 135° with respect to a central axis (25) of the duct (8).

6. Arrangement (1) according to one of the preceding patent claims, an EGR line (26) adjoining the particle separator (18).

7. Arrangement (1) according to one of the preceding patent claims, the particle separator (18) having at least one regeneration device (27) from the group comprising heating wire (28), heating catalytic converter (29), injection (30) and coating (31).

8. Arrangement (1) according to one of the preceding patent claims, at least one heat exchanger (36) being arranged at least around partial regions of the radial honeycomb body (14) and/or of the particle separator (18).

9. Arrangement (1) according to Patent Claim 8, the heat exchanger (36) having a plurality of heating circuits, specifically a first heating circuit (37) arranged outside the outer peripheral surface (16) of the radial honeycomb body (14), a second heating circuit (38) arranged at least partially within the radial honeycomb body (14), and a third heating circuit (39) arranged outside the particle separator (18).

10. Arrangement (1) according to one of the preceding patent claims, at least a first oxidation catalytic converter (32) being provided upstream of the one ionization device (4).

11. Method for operating an arrangement for the exhaust-gas purification of an internal combustion engine (3) according to one of the preceding patent claims, having at least the following steps:
i. electrically charging particles (5) contained in an exhaust-gas flow (2);
ii. agglomerating the charged particles (5) to form larger particles with increased mass inertia;
iii. deflecting at least 80% by volume of the exhaust-gas flow (2) through an angle of at least 90 degrees;
iv. separating the larger particles, which now have increased mass inertia, out of the exhaust-gas flow (2) by means of the deflection of the exhaust-gas flow (2), and
v. depositing the larger particles;
wherein the agglomerated particles (5) from the exhaust-gas flow (2), on account of the increased particle mass, have such an inertia that they at least partially cannot follow the deflection of the exhaust-gas flow (2), but rather pass into a particle separator (18).

12. Motor vehicle (41) with an exhaust system (40) having an arrangement (1) according to one of Patent Claims 1 to 10.

## Revendications

1. Système (1) pour purifier un flux de gaz d'échappement (2) d'un moteur à combustion interne (3) présentant au moins les composants suivants :
a. un dispositif d'ionisation (4) pour charger électriquement des particules (5) dans le flux de gaz d'échappement (2),
b. un dispositif d'agglomération (6) pour agglomérer au moins en partie les particules chargées électriquement (5),
c. un canal (8) présentant au moins une surface périphérique (9) pouvant être parcourue par l'écoulement, une entrée (10) au niveau d'un premier côté frontal (11) et une sortie (12) au niveau d'un deuxième côté frontal (13),
d. un corps en nid d'abeilles radial (14) qui présente une surface périphérique intérieure (15) et une surface périphérique extérieure (16) et des canaux d'écoulement (17), les canaux d'écoulement (17) s'étendant depuis la surface périphérique intérieure (15) jusqu'à la surface périphérique extérieure (16) et le corps en nid d'abeilles radial (14) étant disposé avec sa surface périphérique intérieure (15) sur la surface périphérique (9) du canal (8) et
e. un séparateur de particules (18) qui retient au moins temporairement les particules (5) provenant du flux de gaz d'échappement (2),
le dispositif d'ionisation (4) et le dispositif d'agglomération (6) étant disposés avant l'entrée (10) ou dans le canal (8) et le séparateur de particules (18) étant disposés après la sortie (12) ou dans le canal (8) de telle sorte que le flux de gaz d'échappement (2) soit dévié au moins en partie depuis le canal (8) dans le corps en nid d'abeilles radial (14), **caractérisé en ce que** les particules agglomérées (5) provenant du flux de gaz d'échappement (2), en raison de la masse accrue des particules, présentent une inertie telle qu'elles ne peuvent pas, au moins en partie, suivre la déviation du flux de gaz d'échappement (2) mais qu'elles sont transférées par le canal (8) dans le séparateur de particules (18).

2. Système (1) selon la revendication 1, dans lequel le dispositif d'ionisation (4) présente un dispositif (19) pour réaliser une décharge Corona ou une décharge de plasma.

3. Système (1) selon l'une quelconque des revendications précédentes, dans lequel le dispositif d'agglomération (6) comprend au moins un élément du groupe comprenant un tube (20), une structure (21), un corps en nid d'abeilles (22).

4. Système (1) selon l'une quelconque des revendications précédentes, dans lequel le corps en nid d'abeilles radial (14) présente au moins en partie au moins un revêtement (23) parmi le groupe comprenant un revêtement SCR, un revêtement à 3 voies, un revêtement d'adsorbeur de NOₓ.

5. Système (1) selon l'une quelconque des revendications précédentes, dans lequel le corps en nid d'abeilles radial (14) présente des canaux d'écoulement (17) qui sont disposés suivant un angle (24) de 90° à 135° par rapport à un axe médian (25) du canal (8).

6. Système (1) selon l'une quelconque des revendications précédentes, dans lequel une conduite RGE (26) se raccorde au séparateur de particules (18).

7. Système (1) selon l'une quelconque des revendications précédentes, dans lequel le séparateur de particules (18) présente au moins un dispositif de régénération (27) appartenant au groupe d'un filament chauffant (28), un catalyseur chauffé (29), une injection (30), un revêtement (31).

8. Système (1) selon l'une quelconque des revendications précédentes, dans lequel au moins un échangeur de chaleur (36) est disposé au moins autour de régions partielles du corps en nid d'abeilles (14) et/ou du séparateur de particules (18).

9. Système (1) selon la revendication 8, dans lequel l'échangeur de chaleur (36) présente plusieurs circuits de chauffage, à savoir un premier circuit de chauffage (37) disposé à l'extérieur de la surface périphérique extérieure (16) du corps en nid d'abeilles radial (14), un deuxième circuit de chauffage (38) disposé au moins en partie à l'intérieur du corps en nid d'abeilles radial (14) ainsi qu'un troisième circuit de chauffage (39) disposé à l'extérieur du séparateur de particules (18).

10. Système (1) selon l'une quelconque des revendications précédentes, dans lequel au moins un premier catalyseur d'oxydation (32) est prévu avant ledit dispositif d'ionisation (4).

11. Procédé pour faire fonctionner un système de purification des gaz d'échappement d'un moteur à combustion interne (3) selon l'une quelconque des revendications précédentes, présentant au moins les étapes suivantes :
i. charger électriquement les particules (5) contenues dans un flux de gaz d'échappement (2)
ii. agglomérer les particules chargées (5) pour former des plus grosses particules ayant une plus grande inertie de masse ;
iii. dévier au moins 80 % en volume du flux de gaz d'échappement (2) d'au moins 90° ;
iv. séparer les plus grosses particules ayant à présent une plus grande inertie de masse du flux de gaz d'échappement (2) par le biais de la déviation du flux de gaz d'échappement (2) et
v. séparer les plus grosses particules ;
les particules agglomérées (5) provenant du flux de gaz d'échappement (2) présentant, du fait de leur masse de particules accrues, une inertie telle qu'elles ne peuvent pas, au moins en partie, suivre la déviation du flux de gaz d'échappement (2) mais qu'elles sont transférées dans un séparateur de particules (18).

12. Véhicule automobile (41) comprenant un système de gaz d'échappement (40), présentant un système (1) selon l'une quelconque des revendications 1 à 10.
